# EUROPEAN PATENT APPLICATION

(11) **EP 3 771 585 A1**
(43) Date of publication of application: **03.02.2021**
(21) Application number: 19189444.3
(22) Date of filing: 31.07.2019
(51) Int. Cl.: B60K 15/03

(54) **HEIGHT ADJUSTABLE REINFORCEMENT ELEMENT FOR A VEHICLE THERMOPLASTIC FUEL TANK**

(71) Applicant: Plastic Omnium Advanced Innovation and Research, 1130 Bruxelles (BE)
(72) Inventor: CHAUSSINAND, Antoine, 1130 BRUXELLES (BE); VAN SCHAFTINGEN, Jules-Joseph, 1130 BRUXELLES (BE); KIM, Tae-Gwon, 1130 BRUXELLES (BE)
(74) Representative: LLR

(57) **Abstract**

The invention related to an internal reinforcement element (1) for thermoplastic fuel tank for a vehicle, to thermoplastic fuel tank comprising said an internal reinforcement element (1) and to a method to manufacture such a tank. The internal reinforcement element (1) comprises at least a first external part (2) provided to be attached to a first wall of the thermoplastic fuel tank and at least a second external part (3) being provided to be attached to a second wall of the thermoplastic fuel tank, the first wall and the second wall being opposite walls of the thermoplastic fuel tank and a height adjusting means (4) characterized in that the height adjusting means (4) comprises a screwing means (5) comprising a threaded element (50) and a first nut element (51).

## Description

The present invention relates to an internal reinforcement element for a vehicle thermoplastic fuel tank, preferably for a hybrid vehicle thermoplastic fuel tank. The invention relates also to a vehicle thermoplastic fuel tank comprising said internal reinforcement element and to a method of manufacturing such a vehicle thermoplastic fuel tank.

Fuel tanks assembled from two thermoplastic shells are known, and may comprise a stabilizing column or wall in the internal volume of the tank in order to limit deformations of the tank. Traditionally fuel systems in passenger vehicles are designed to hold a specific amount of liquid fuel at a pressure essentially the same as the ambient pressure. With the introduction of hybrid vehicles and more specifically Plug in Hybrids, which are designed such that they could potentially go several months without using fuel, it is in the interest of the system designers to hold pressure inside the fuel tank to limit the emissions that could potentially bleed through the activated carbon canister due to diurnal cycles. In addition, holding pressure ensures that the composition of the fuel stays the same during storage. However, the tanks must be made resistant to this internal pressure. Therefore, the tank reinforcement can be realized by linking two opposite tank walls with each other using an internal reinforcement element. It is known to form an internal reinforcement element in the form of a pillar or wall using a first pillar or wall part. The pillar may be made of two materials, comprising e.g. a first portion made of a first material compatible with High-Density polyethylene (HDPE) and a second portion of a second material having a limited deformation and/or creep.

The document EP 2 697 090 B1 discloses for example an internal reinforcement element suitable to connect to opposite walls portions of a fuel tank. The internal reinforcing element comprises a hollow having a ratio of at least 1.8 between the diameter of its cross section at its ends and the diameter of its cross section at at least one intermediate point.

Unfortunately the internal reinforcement element disclosed in the document EP 2 697 090 B1 has a fixed dimension, said internal reinforcement element being manufactured by injection molding using a mold having a standardized size. Moreover, due to its fixed dimension, the internal reinforcement element may be only used for specific thermoplastic fuel tank design, the design of the tank being determined by the mold used during the blow molding process of the tank.

The document US2018/0141432 A1 discloses an internal reinforcement element for a fuel tank having a column shape including a first portion coupled to a wall of the fuel tank including a plurality of circumferential notches formed by an inner surface and a second portion coupled to a second wall of the fuel tank and including a plurality of angled extensions formed by an outer surface, the plurality of angled extensions shaped to fit within the plurality of circumferential notches. Said internal reinforcement element is height adjustable by moving the first portion into the second when the fuel tank is submitted to a difference of pressure between the atmospheric pressure and the pressure of fuel/air within the fuel tank, which is above a threshold. Nevertheless, the adjustment of the height of the internal reinforcement element is performed once the pillar is fixed in the fuel tank and exposed to a high-pressure difference. Moreover, the internal reinforcement element does not comprise any weak point to get the internal reinforcement element break during hi-energy impact.

It is an object of the present invention to provide an internal reinforcement element for a vehicle thermoplastic fuel tank, preferably for a hybrid vehicle thermoplastic fuel tank, which overcomes the foregoing problems heretofore existing in the industry.

In particular, it is a first objective of the present disclosure to provide an internal reinforcement element, which is adaptable to any tank design.

A second objective of the present invention is also to provide a manufacturing method of a vehicle thermoplastic fuel tank comprising an internal reinforcement element, preferably for a hybrid vehicle thermoplastic fuel tank comprising an internal reinforcement element.

According to a first embodiment of the present disclosure these objectives are achieved with an internal reinforcement element for thermoplastic fuel tank for a vehicle, wherein said internal reinforcement element comprises at least a first external part provided to be attached to a first wall of the thermoplastic fuel tank and at least a second external part being provided to be attached to a second wall of the thermoplastic fuel tank, the first wall and the second wall being opposite walls of the thermoplastic fuel tank and a height adjusting means characterized in that the height adjusting means comprises a screwing means comprising a threaded element and a first nut element.

The inventors have noted that the internal reinforcement element including the height adjusting means allows the internal reinforcement element to be adaptable to different tank designs or to the different locations inside a same tank without a need to redesign the height of the internal reinforcement element. The height adjusting means comprises a screwing means, said screwing means comprising at least the threaded elements and the first nut allows by screwing motion to change the height of the internal reinforcement element and so to adapt it to the distance between the two opposite walls of the thermoplastic fuel tank wherein said internal reinforcement element will be fixed. Consequently, the internal reinforcement element according to the invention offers advantageously the possibility to standardize internal reinforcement elements for thermoplastic fuel tank and leads to a cost saving in development time and tooling to design of said element due to its adaptability to thermoplastic fuel tank dimensions.

According to a preferred embodiment, the internal reinforcement element for a thermoplastic fuel tank for a vehicle according to the invention comprises a blocking means of the screwing means.

The inventors have noted that during a manual adjustment of the height of the internal reinforcement element, in other words during a manual screwing, done during the manufacturing a thermoplastic fuel tank, a blocking means is advantageously used to control the requested height of the internal reinforcement element, said blocking means being included in the internal reinforcement element. When screwing the threaded element and the first nut element, the internal reinforcement height will decrease. In other words, the distance between the first external part and the second external part of the internal reinforcement will decrease by screwing. The blocking means will stop the screwing mechanism at the required height of the internal reinforcement element, in other words at the required distance between the first external part and the second external part of the reinforcement internal element. The internal reinforcement height is thus warranted even with a manual screwing method.

According to a preferred embodiment, the internal reinforcement element for thermoplastic fuel tank according to the invention is such that the treaded element is a rod.

The inventors have noted that the first external part and the second external part may be connected by a threaded element, said threaded element being by a rod. The rod may be completely threaded or partially threaded. In case a rod which is partially threaded, the two extremities of the rod are threaded. This allows the rod to be screwed into the first external and the second external parts that integrate a nut element. Alternatively, the rod may be partially threaded on one extremity the other being glued to or welded to or a part of the first or the second external part.

According to a preferred embodiment, the internal reinforcement element for thermoplastic fuel tank according to the invention is such that the thread of the threaded element is located on one part of the threaded element. By the expression "the threaded element is located on one part of the threaded element", we intend to mean that the tread of the threaded element is not always present on all the length of the treaded element.

According to a preferred embodiment, the internal reinforcement element for thermoplastic fuel tank according to the invention comprises a breaking means. Said breaking means is a weak point of the internal reinforcement element that will break during a high-energy impact. The breaking means may be a section of the internal reinforcement element having a smaller diameter, a crack or a slot for example.

The inventors have noted that in order to avoid a breakage of the thermoplastic fuel tank during high-energy impact, the internal reinforcement element should be able to break. The breakage will allow the two opposite wall of the thermoplastic fuel connected by the internal reinforcement element to move independently and so to not break during high-energy impact.

In order to control this breakage, a breaking means can be implemented on the internal reinforcement element. The breakage means can be made by a section change in at least one of the external part on inside the threaded element or event in the threads themselves.

According to a preferred embodiment, the internal reinforcement element for thermoplastic fuel tank according to the invention is such that the first and/or the second external part, preferably the first and the second external part, comprise a welding part provided to be welded to the wall of the thermoplastic fuel tank.

According to a preferred embodiment of the previous one, the internal reinforcement element for thermoplastic fuel tank according to the invention is such that the welding part is partly overmolded on the first and/or the second external part. By the expression "the welding part is partly overmolded on the first and/or the second external part", we intend to mean that at least 10% of the surface of the first and/or the second external part is covered by the welding part, preferably at least 20% of the surface of the first and/or the second external part is covered by the welding part.

According to a preferred embodiment of the previous one, the internal reinforcement element for thermoplastic fuel tank according to the invention is such that the welding part is made of High-Density polyethylene (HDPE).

According to a preferred embodiment, the internal reinforcement element for thermoplastic fuel tank according to the invention is such that the first external part, the second external part and the screwing means are made of a material selected from the group of materials consisting of Polyethylene (PE), steel, Polyphthalamide (PPA), Polyphenylene sulfide (PPS), Polyamide (PA), Polyketon (PK) and Polyoxymethylene (POM), preferably the first external part, the second external part and the screwing means are made of a material selected from the group of materials consisting of steel, Polyphthalamide (PPA), Polyphenylene sulfide (PPS), Polyamide (PA), Polyketon (PK) and Polyoxymethylene (POM).

According to a preferred embodiment, the internal reinforcement element for thermoplastic fuel tank according to the invention is such that the treaded element is located on the first external part. Preferably, the threaded element and the first external part constitute a monobloc structure.

According to a preferred embodiment, the internal reinforcement element for thermoplastic fuel tank according to the invention is such that the first nut element is located on the second external part.

A second object of the invention is to provide a thermoplastic fuel tank for a vehicle comprising at least one internal reinforcement element according to the invention.

The inventors have noted that the attachment resulting by the link of the two opposite walls of the tank decreases the deformation of the tank regarding the extension due to overpressure inside the tank, or the collapsing due to vacuum inside the tank.

A third object of the invention is to provide a method of manufacturing a thermoplastic fuel tank for a vehicle comprising at least the steps of:
- Providing a parison;
- Blow-molding of the parison in a mould;
- Providing an internal reinforcement element comprising a height adjusting means comprising a screwing means;
- Adjusting the height of the internal reinforcement element by screwing ;
- Attaching the internal reinforcement element to two opposite walls of the thermoplastic fuel tank;

According to a preferred embodiment, the method of manufacturing a thermoplastic fuel tank for a vehicle is such that the step of attaching the internal reinforcement element to two opposite walls of the thermoplastic fuel tank comprise a step of welding.

According a preferred embodiment, the method of manufacturing a thermoplastic fuel tank for a vehicle is such that the step of attaching the internal reinforcement element to two opposite walls of the thermoplastic fuel tank is performed in the mould.

According to a particular embodiment, the step of adjusting the height of the internal reinforcement element by screwing is performed after a step of measuring the thickness of the parison. This advantageously allows the internal reinforcement element to be adaptable to the thickness of the tank. Said thickness may vary during the blowmolding process due to a variation of the parison thickness.

Particular and preferred aspects of the invention are set out in the accompanying independent and dependent claims. Features from the dependent claims may be combined with features of the independent claims and with features of other dependent claims as appropriate and not merely as explicitly set out in the claims.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

The term "fuel tank" is understood to mean an impermeable tank that can store fuel under diverse and varied environmental and usage conditions. An example of this tank is that with which motor vehicles are equipped. The fuel tank according to the invention is made of thermoplastic, that is to say made of a material comprising at least one synthetic resin polymer. The term "thermoplastic" is understood to mean any thermoplastic polymer, including thermoplastic elastomers, and blends thereof. The term "polymer" is understood to mean both homopolymers and copolymers (especially binary or ternary copolymers). Examples of such copolymers are random copolymers, linear block copolymers, other block copolymers and graft copolymers. One polymer often employed is polyethylene. Excellent results have been obtained with high-density polyethylene (HDPE). Preferably, the tank also comprises a layer of a fuel-impermeable resin such as, for example, EVOH (a partially hydrolyzed ethylene/vinyl acetate copolymer). Alternatively, the tank may be subjected to a surface treatment (fluorination or sulphonation) for the purpose of making it impermeable to fuel. A multilayer fuel tank comprising an EVOH layer between two HDPE layers is successfully used in the frame of the invention.

The expression "height of the internal reinforcement element" is understood to mean the biggest dimension of the internal reinforcement element, said dimension is preferably the length of the internal reinforcement element.

The present disclosure will be better understood on reading the following examples, including figures, which are given by way of example.
Fig. 1 is a vertical cross-section of a first variant of an internal reinforcement element according to the invention.
Fig. 2 is a vertical cross-section of a second variant of an internal reinforcement element according to the invention.
Fig. 3 is a vertical cross-section of a third variant of an internal reinforcement element according to the invention.
Fig. 4 is a vertical cross-section of a fourth variant of an internal reinforcement element according to the invention.
Fig. 5 is a vertical cross-section of a fifth variant of an internal reinforcement element according to the invention during a step of.adjusting the height of the internal reinforcement element by screwing during the manufacture of a thermoplastic fuel tank.

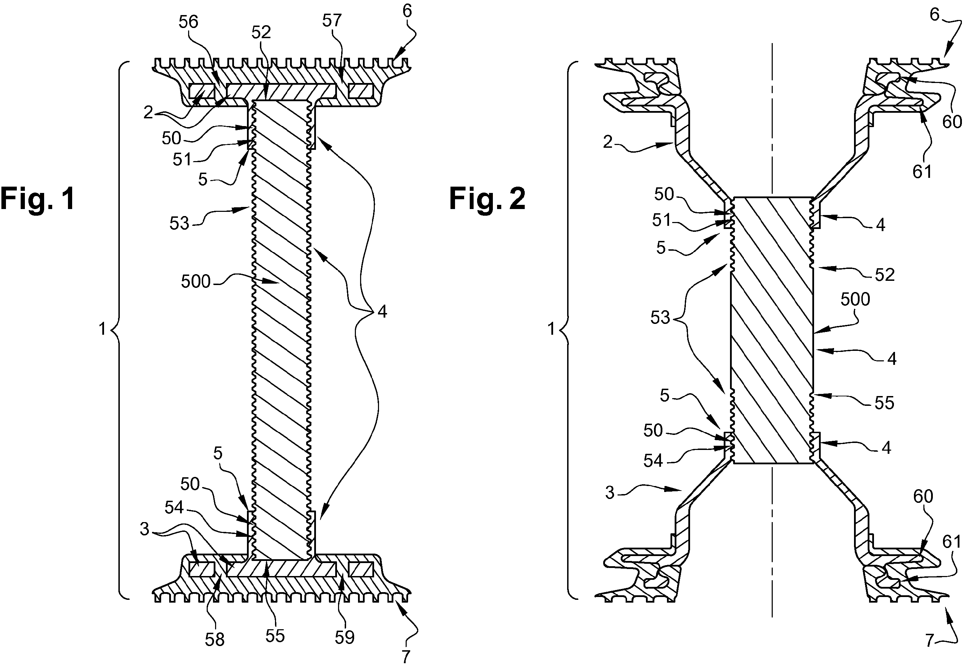

Fig. 1 discloses an internal reinforcement element (1) for thermoplastic fuel tank for a vehicle according to the invention. The internal reinforcement element (1) comprises at least a first external part (2) provided to be attached to a first wall of the thermoplastic fuel tank and at least a second external part (3) being provided to be attached to a second wall of the thermoplastic fuel tank, the first wall and the second wall being opposite walls of the thermoplastic fuel tank and a height adjusting means (4). The height adjusting means (4) comprises a screwing means (5) comprising a threaded element (50) and a first nut element (51). Said first nut element (51) is located on the first external part (2). The treaded element (50) is a rod (500). The thread (53) of the threaded element (50) is located on at least one part of the threaded element (50). The screwing means (5) comprises a second nut element (54). Said second nut element (54) is located on the second external part (3). The internal reinforcement element comprises a blocking means (52, 55) of the screwing means (4). The blocking means (52, 55) is located on the first external part (2) and on the second external part (3). The internal reinforcement element (1) comprise at least one welding part (6, 7) provided to be welded to the wall of the thermoplastic fuel tank. The welding parts (6, 7) are partly overmolded on the first external part (2) and on the second external part (3). The first external part (2) and the second external part (3) comprise at least one through hole (56, 57, 58, 59), preferably two through holes, most preferably three through holes, the most preferably four through holes, provided to create a mechanical interconnection between the first external part (2) and the overmolded welding part (6) and between the second external part (3) and the overmolded welding part (7). The welding part (6, 7) is made of High Density Polyethyene (HDPE). The first external part (2), the second external part (3) and the screwing means (4) are made of a material selected from the group of materials consisting of polyethylene (PE), steel, Polyphthalamide (PPA), Polyphenylene sulfide (PPS), Polyamide (PA), Polyketon (PK) and Polyoxymethylene (POM), preferably the first external part, the second external part and the screwing means are made of a material selected from the group of materials consisting of steel, Polyphthalamide (PPA), Polyphenylene sulfide (PPS), Polyamide (PA), Polyketon (PK) and Polyoxymethylene (POM).

Fig. 2 discloses an internal reinforcement element (1) for thermoplastic fuel tank for a vehicle according to the invention. The internal reinforcement element (1) comprises at least a first external part (2) provided to be attached to a first wall of the thermoplastic fuel tank and at least a second external part (3) being provided to be attached to a second wall of the thermoplastic fuel tank, the first wall and the second wall being opposite walls of the thermoplastic fuel tank and a height adjusting means (4). The height adjusting means (4) comprises a screwing means (5) comprising a threaded element (50) and a first nut element (51). Said first nut element (51) is located on the first external part (2). The treaded element (50) is a rod (500). The thread (53) of the threaded element (50) is located on the two external part of the threaded element (50). The screwing means (5) comprises a second nut element (54). Said second nut element (5) is located on the second external part (3). The internal reinforcement element (1) comprises at least a blocking means (52, 55) of the screwing means (4). The blocking means (52, 55) are located on the treaded element (50) and correspond to the end of the treads (53). The internal reinforcement element (1) comprise at least one welding part (6, 7) provided to be welded to the wall of the thermoplastic fuel tank. The welding parts (6, 7) are partly overmolded on the first external part (2) and on the second external part (3). The first external part (2) and the second external part (3) comprise at least rib (60, 61), preferably a plurality of ribs (60, 61) provided to create a mechanical interconnection between the first external part (2),and the overmolded welding part (6) and between the second external part (3) and the overmolded welding part (7). The welding part (6, 7) is made of High Density Polyethyene (HDPE). The first external part (2), the second external part (3) and the screwing means (4) are made of a material selected from the group of materials consisting of polyethylene (PE), steel, Polyphthalamide (PPA), Polyphenylene sulfide (PPS), Polyamide (PA), Polyketon (PK) and Polyoxymethylene (POM), preferably the first external part, the second external part and the screwing means are made of a material selected from the group of materials consisting of steel, Polyphthalamide (PPA), Polyphenylene sulfide (PPS), Polyamide (PA), Polyketon (PK) and Polyoxymethylene (POM).

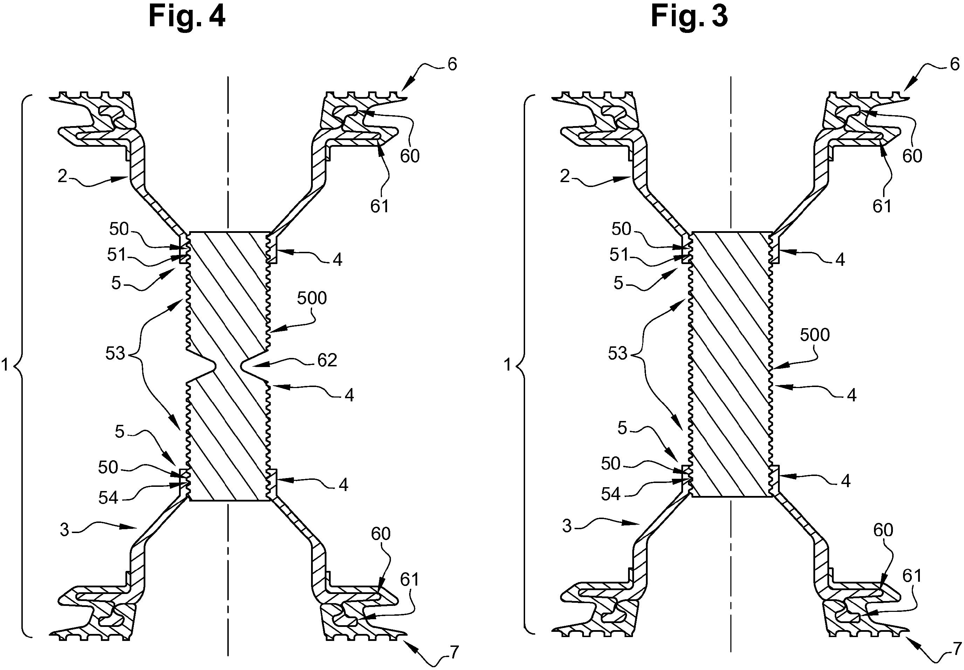

Fig. 3 discloses an internal reinforcement element (1) for thermoplastic fuel tank for a vehicle according to the invention. The internal reinforcement element (1) comprises at least a first external part (2) provided to be attached to a first wall of the thermoplastic fuel tank and at least a second external part (3) being provided to be attached to a second wall of the thermoplastic fuel tank, the first wall and the second wall being opposite walls of the thermoplastic fuel tank and a height adjusting means (4). The height adjusting means (4) comprises a screwing means (5) comprising a threaded element (50) and a first nut element (51). Said first nut element (51) is located on the first external part (2). The treaded element (50) is a rod (500). The thread (53) of the threaded element (50) is not located on the two extremities of the threaded element (50). The screwing means (5) comprises a second nut element (54). Said second nut element (5) is located on the second external part (3). The internal reinforcement element (1) comprise at least one welding part (6, 7) provided to be welded to the wall of the thermoplastic fuel tank. The welding parts (6, 7) are partly overmolded on the first external part (2) and on the second external part (3). The first external part (2) and the second external part (3) comprise at least rib (60, 61), preferably a plurality of ribs (60, 61) provided to create a mechanical interconnection between the first external part (2),and the overmolded welding part (6) and between the second external part (3) and the overmolded welding part (7). The welding part (6, 7) is made of High Density Polyethyene (HDPE). The first external part (2), the second external part (3) and the screwing means (4) are made of a material selected from the group of materials consisting of polyethylene (PE), steel, Polyphthalamide (PPA), Polyphenylene sulfide (PPS), Polyamide (PA), Polyketon (PK) and Polyoxymethylene (POM), preferably the first external part, the second external part and the screwing means are made of a material selected from the group of materials consisting of steel, Polyphthalamide (PPA), Polyphenylene sulfide (PPS), Polyamide (PA), Polyketon (PK) and Polyoxymethylene (POM).

Fig. 4 discloses an internal reinforcement element (1) for thermoplastic fuel tank for a vehicle according to the invention. The internal reinforcement element (1) comprises at least a first external part (2) provided to be attached to a first wall of the thermoplastic fuel tank and at least a second external part (3) being provided to be attached to a second wall of the thermoplastic fuel tank, the first wall and the second wall being opposite walls of the thermoplastic fuel tank and a height adjusting means (4). The height adjusting means (4) comprises a screwing means (5) comprising a threaded element (50) and a first nut element (51). Said first nut element (51) is located on the first external part (2). The treaded element (50) is a rod (500). The thread (53) of the threaded element (50) is not located on the two extremities of the threaded element (50). The screwing means (5) comprises a second nut element (54). Said second nut element (5) is located on the second external part (3). The internal reinforcement element (1) comprise at least one welding part (6, 7) provided to be welded to the wall of the thermoplastic fuel tank. The welding parts (6, 7) are partly overmolded on the first external part (2) and on the second external part (3). The first external part (2) and the second external part (3) comprise at least rib (60, 61), preferably a plurality of ribs (60, 61) provided to create a mechanical interconnection between the first external part (2),and the overmolded welding part (6) and between the second external part (3) and the overmolded welding part (7). The welding part (6, 7) is made of High Density Polyethyene (HDPE). The first external part (2), the second external part (3) and the screwing means (4) are made of a material selected from the group of materials consisting of polyethylene (PE), steel, Polyphthalamide (PPA), Polyphenylene sulfide (PPS), Polyamide (PA), Polyketon (PK) and Polyoxymethylene (POM), preferably the first external part, the second external part and the screwing means are made of a material selected from the group of materials consisting of steel, Polyphthalamide (PPA), Polyphenylene sulfide (PPS), Polyamide (PA), Polyketon (PK) and Polyoxymethylene (POM). The internal reinforcement element (1) comprises a breaking means (62) which is a part of the rod (500) having a thinner diameter.

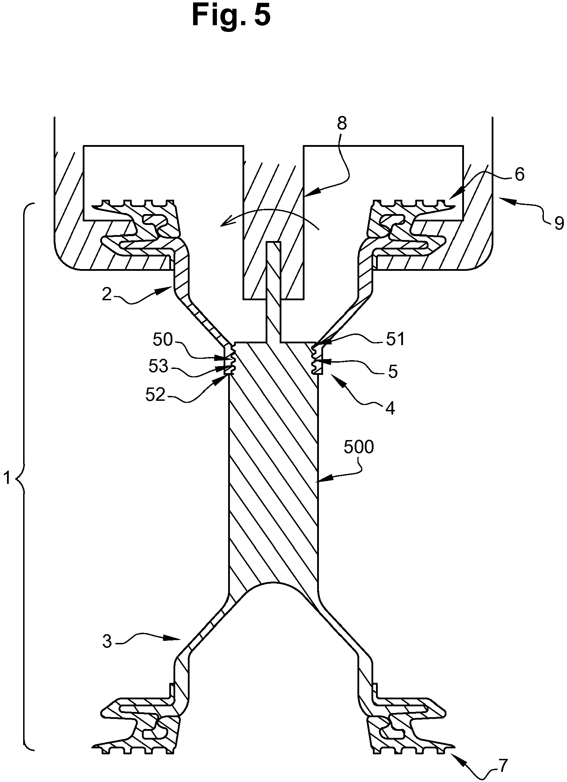

Fig. 5 discloses is the positioning of an internal reinforcement element (1) according to the invention during a step of.adjusting the height of said internal reinforcement element (1) by screwing during the manufacture of a thermoplastic fuel tank. The internal reinforcement element (1) comprises at least a first external part (2) provided to be attached to a first wall of the thermoplastic fuel tank and at least a second external part (3) being provided to be attached to a second wall of the thermoplastic fuel tank, the first wall and the second wall being opposite walls of the thermoplastic fuel tank and a height adjusting means (4). The height adjusting means (4) comprises a screwing means (5) comprising a threaded element (50) and a first nut element (51). Said first nut element (51) is located on the first external part (2). The treaded element (50) is a rod (500) which constitutes a monobloc structure with the second external part (3). The thread (53) of the threaded element (50) is located one extremity of the threaded element (50). The internal reinforcement element (1) comprises at least a blocking means (52) of the screwing means (4). The blocking means (52,) correspond to the end of the tread (53). The internal reinforcement element (1) comprises at least one welding part (6, 7) provided to be welded to the wall of the thermoplastic fuel tank. The welding parts (6, 7) are partly overmolded on the first external part (2) and on the second external part (3). The welding part (6, 7) is made of High Density Polyethyene (HDPE). The first external part (2), the second external part (3) and the screwing means (4) are made of a material selected from the group of materials consisting of polyethylene (PE), steel, Polyphthalamide (PPA), Polyphenylene sulfide (PPS), Polyamide (PA), Polyketon (PK) and Polyoxymethylene (POM), preferably the first external part, the second external part and the screwing means are made of a material selected from the group of materials consisting of steel, Polyphthalamide (PPA), Polyphenylene sulfide (PPS), Polyamide (PA), Polyketon (PK) and Polyoxymethylene (POM). The step of adjusting the height of the internal reinforcement element by screwing during the manufacture of a thermoplastic fuel tank is performed via a tool (8) said tool may be located on the core (9) of blow moulding mould.

It is to be understood that although preferred embodiments, specific constructions and configurations, as well as materials, have been discussed herein for devices according to the present invention, various changes or modifications in form and detail may be made without departing from the scope and spirit of this invention.

## Claims

1. Internal reinforcement element (1) for thermoplastic fuel tank for a vehicle, wherein said internal reinforcement element (1) comprises at least a first external part (2) provided to be attached to a first wall of the thermoplastic fuel tank and at least a second external part (3) being provided to be attached to a second wall of the thermoplastic fuel tank, the first wall and the second wall being opposite walls of the thermoplastic fuel tank and a height adjusting means (4) **characterized in that** the height adjusting means (4) comprises a screwing means (5) comprising a threaded element (50) and a first nut element (51).

2. Internal reinforcement element (1) for a thermoplastic fuel tank for a vehicle according to claim 1, wherein it comprises a blocking means (52) of the screwing means.

3. Internal reinforcement element (1) for a thermoplastic fuel tank according to any one of the preceding claims, wherein the treaded element (50) is a rod (500).

4. Internal reinforcement element (1) for a thermoplastic fuel tank for a vehicle according to any one of the preceding claims, wherein the thread (53) of the threaded element (50) is located on at least one part of the threaded element (50).

5. Internal reinforcement element (1) for a thermoplastic fuel tank for a vehicle according to any one of the preceding claims, wherein it comprises a breaking means (62).

6. Internal reinforcement element (1) for a thermoplastic fuel tank for a vehicle according to any one of the preceding claims, wherein said internal reinforcement element (1) comprise at least a welding part (6) provided to be welded to the wall of the thermoplastic fuel tank.

7. Internal reinforcement element for a thermoplastic fuel tank for a vehicle according to claim 6, wherein the welding part (6) is partly overmolded on the first external part (2) and/or on the second external part (3), preferably the welding part (6) is partly overmolded on the first external part (2) and on the second external part (3) .

8. Internal reinforcement element for a thermoplastic fuel tank for a vehicle according to claim 7, wherein the welding part (6) is made of High Density Polyethyene (HDPE)

9. Internal reinforcement element for a thermoplastic fuel tank for a vehicle according to any one of the preceding claims, wherein the first external (2) part, the second external part (3) and the screwing means (5) are made of a material selected from the group of materials consisting of Polyethylene (PE), steel, Polyphthalamide (PPA), Polyphenylene sulfide (PPS), Polyamide (PA), Polyketon (PK) and Polyoxymethylene (POM), preferably the first external part, the second external part and the screwing means are made of a material selected from the group of materials consisting of steel, Polyphthalamide (PPA), Polyphenylene sulfide (PPS), Polyamide (PA), Polyketon (PK) and Polyoxymethylene (POM).

10. Internal reinforcement element for thermoplastic fuel tank for a vehicle according to any one of the preceding claims, wherein the treaded element (50) is located on the first external part (2).

11. Internal reinforcement element for thermoplastic fuel tank for a vehicle according to any one of the preceding claims, wherein the first nut element (51) is located on the second external part (3).

12. Thermoplastic fuel tank for a vehicle comprising at least one internal reinforcement element (1) according to any one of the preceding claims.

13. Method of manufacturing a thermoplastic fuel tank for a vehicle comprising at least the steps of:
• Providing a parison;
• Blow-molding of the parison in a mould;
• Providing an internal reinforcement element (1) comprising a height adjusting means (4) comprising a screwing means (5);
• Adjusting the height of the internal reinforcement element (1) by screwing ;
• Attaching the internal reinforcement element (1) to two opposite walls of the thermoplastic fuel tank;

14. Method of manufacturing a thermoplastic fuel tank for a vehicle according to claim 13, wherein the step of attaching the internal reinforcement element (1) to two opposite walls of the thermoplastic fuel tank comprise a step of welding.

15. Method of manufacturing a thermoplastic fuel tank for a vehicle according to any one of claims 13 to 14, wherein the step of attaching the internal reinforcement element (1) to two opposite walls of the thermoplastic fuel tank is performed in the mould
